# EUROPEAN PATENT APPLICATION

(11) **EP 1 396 509 A1**
(43) Date of publication of application: **10.03.2004**
(21) Application number: 03018374.3
(22) Date of filing: 13.08.2003
(51) Int. Cl.: C08G 12/38, E04B 1/86

(54) **Low formaldehyde emission panel**

(30) Priority: 09.09.2002 US 238074
(71) Applicant: Armstrong World Industries, Inc., Lancaster Pennsylvania 17603 (US)
(72) Inventor: Belmares, Hector, Lancaster, Pennsylvania 17603 (US); Brown, David S., Lancaster, Pennsylvania 17603 (US); Sirdeshpande, Gourish, Lancaster, Pennsylvania 17601 (US); Line, Larry L., Lancaster, Pennsylvania 17401 (US); Baker, Joyce, Bainbridge, Pennsylvania 17502 (US); Mundorf, Karen, Lancaster, Pennsylvania 17601 (US)
(74) Representative: Finck, Dieter, Dr.Ing.

(57) **Abstract**

Disclosed is both a method and composition for making a low formaldehyde emission panel. The panel includes a scrim that is typically formed from fiberglass bound together in a mat by a substantially formaldehyde free resin. The scrim is applied to the facing side of the panel by an adhesive that is also substantially formaldehyde free. The adhesive may also contain a formaldehyde scavenger. The formed panel has a low rate of formaldehyde emittance and can used as an acoustical ceiling panel.

## Description

### TECHNICAL FIELD

The present invention generally relates to panels and more specifically to acoustical panels having a low formaldehyde emission rate.

### BACKGROUND

Acoustical panels are used for a variety of different purposes, including in suspended ceilings and generally are comprised of an array of different fibers, binders and fillers. Primarily, fibrous panels are made from mineral wool, perlite, cellulosic fibers, fillers and binders. Additionally, acoustical panels often contain formaldehyde products which are often used to impart desirable characteristics to the panel such as sag resistance.

Panel production utilizes combinations of fibers, fillers, bulking agents, binders, water, surfactants and other additives mixed into a slurry and processed into a panel. Cellulosic fibers are typically in the form of newsprint. Fillers may include expanded perlite, brighteners, such as titanium oxide, and clay. Binders may include starch, latex, formaldehyde-based resins and reconstituted paper products linked together to create a binding system locking all ingredients into a structural matrix.

Formaldehyde based resins are often added to the panels in the form of a back coating to reduce sagging in the panel. Organic binders, such as starch, are susceptible to moisture which can lead to the softening of the panel resulting in sag. In a panel back-coated with a formaldehyde-based resin such as melamine-formaldehyde resin, the back coating expands in humid conditions. The force created by the expansion of the back of the panel tends to counteract the sagging force of gravity, which can prevent or inhibit sagging.

Additionally formaldehyde resins are used to bind the various panel products in the formation of a laminated panel. Laminated panels are less susceptible to sag and can present an improved visual by attaching a scrim to the facing side of the panel to provide both support and to add a decorative effect. The scrim is attached to the facing side by an adhesive that, together with the scrim, provides a substantially rigid support structure to prevent sagging. The scrim may be formed from a fiberglass mat wherein the fibers are bound together and held to the board using an adhesive comprising formaldehyde. The adhesive is typically an emulsion polymer or suspension comprised of free carboxyl functionality and/or easily hydrolyzable functional groups such as acetates, acrylics, and other carboxyl ester groups. These functional groups help to impart adhesion to a variety of substrates. Such functional groups are susceptible to biodegradation by bacteria and fungi. The biodegradation usually starts with a hydrolysis of the functional groups by the microorganisms or by a direct attack on functional groups such as free carboxyl groups to then be followed by a loss of functional groups and further biodeterioration of the polymer chain of the adhesive. Typically, formaldehyde is added to the adhesive to prevent the biodegradation of the emulsion polymer. Additionally, the scrim also includes certain fire retardants or other additives that emit formaldehyde during heating, curing or when exposed to humidity.

Unfortunately, formaldehyde resins tend to emit formaldehyde, which is a known environmental irritant. Formaldehyde resin as a binder can release formaldehyde to the environment when exposed to heat or even when exposed to moisture. Such formaldehyde release is undesirable, particularly in enclosed environments. It is, therefore, desirable to reduce the release of formaldehyde into the environment. Thus, what is needed is a panel with a reduced formaldehyde emittance.

### SUMMARY

The present invention is both a method and composition for making a low formaldehyde emission panel. The panel includes a scrim that is typically formed from fiberglass bound together in a mat by a substantially formaldehyde free resin. The scrim is applied to the facing side of the panel by an adhesive that is also substantially formaldehyde free. The adhesive may also contain a formaldehyde scavenger. The formed panel has a low rate of formaldehyde emission and can be used as an acoustical ceiling panel.

In an embodiment, the low-formaldehyde panel includes a substrate having a facing side with a scrim attached to the facing side. The scrim is attached to the facing side by an adhesive including about 15% to about 70% by weight of at least one non-hydrolyzable, hydrophobic monomer copolymerized into the polymer structure of the adhesive and about 1% to about 5% of a formaldehyde scavenger. Typically, the scrim is formed from a fiberglass mat bound by a polyvinyl alcohol and is substantially free of formaldehyde. The non-hydrolyzable, hydrophobic monomer may be selected from the group consisting of ethylene, styrene, vinyl chloride and vinylidene chloride/fluoride. The formaldehyde scavenger may be urea. Additionally, a coating may be applied to the scrim. Typically, the panel has a formaldehyde emittance of less than 20 µg/m² per hour.

A further embodiment provides a low-formaldehyde panel including a substrate having a facing side with an attached substantially formaldehyde free scrim. The scrim may be formed from fibers bound by a substantially formaldehyde free resin. The scrim has a wicking tension of between about 55 to about 70 dynes/cm and is attached to the facing side by an adhesive. The adhesive includes about 15% to about 70% by weight of a non-hydrolyzable, hydrophobic monomer.

A further embodiment includes a method for making a low-formaldehyde panel. The method may comprise providing a substrate having a facing side. The substrate is typically an acoustical panel. A substantially formaldehyde free scrim is then attached to the facing side by an adhesive. The adhesive includes about 15% to about 70% by weight of a non-hydrolyzable, hydrophobic monomer and about 1% to about 5% of a formaldehyde scavenger.

These and other features of the present invention will become apparent upon reading the following specification, when taken in conjunction with the accompanying drawing.

### DRAWINGS

In the drawings:

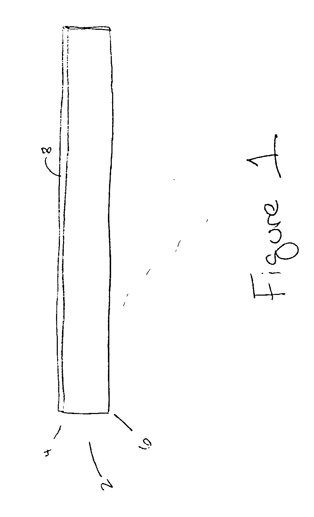

Figure 1 is a side view of a panel having facing and backing sides with a scrim applied to the facing side according to principles of the invention.

### DETAILED DESCRIPTION

The present invention comprises both a method and composition for making a panel having low formaldehyde emission. The panel includes a scrim that is typically formed from fiberglass bound together by a substantially formaldehyde free resin to form a mat that can be woven or non-woven. The panel has both a facing side and a backing side. The scrim is applied to the facing side of the panel by an adhesive that is also substantially formaldehyde free. The adhesive may also contain a formaldehyde scavenger. Typically, the panel is an acoustical ceiling panel used for attenuating sound in a room in which it is installed.

Some of the components of the panel are described as being substantially formaldehyde free. The term "substantially formaldehyde free" is defined as meaning that an incidental or background quantity of formaldehyde may be present in the components of the panel composition such that the panel has a formaldehyde emittance of less than 20 µg/m² per hour, which is to be within the scope of the invention. Thus, formaldehyde may be present in an embodiment of the invention in the claimed substantially formaldehyde free components of the invention so long as the panel has a formaldehyde emittance of less than 20 µg/m² per hour.

In greater detail, the panel is such that it emits a low concentration of formaldehyde into the surroundings. Low fonnaldehyde emission can be characterized as a panel having a formaldehyde emittance of less than 40 µg/m² per hour. In a further embodiment, low formaldehyde emission can be characterized as a panel having a formaldehyde emittance of less than 20 µg/m² per hour.

The substrate can be any substrate capable of forming a panel. Typically, the substrate is a fibrous substrate such as an acoustical panel formed from a wool and binder. The wool can be a mineral wool and is combined with cellulosic fibers and a binder such as starch. Additionally, broke in the form of recycled board product is added to the substrate mix. This broke may contain trace amounts of formaldehyde. An example composition of the substrate may include 70-90% wool, 5-15% cellulose, 5-10% binder (starch) and 5-20% broke.

Additionally, the substrate has both a facing side and a backing side. The facing side can be the side that is presented to the room or public space. The backing side is that side that faces a wall or ceiling plenum. The sides are directly opposed to each other.

The scrim is adhered to the facing side of the substrate. The scrim may formed from any woven or non-woven material such as paper or fiberglass. In one embodiment, the scrim is formed from fiberglass. The fiberglass scrim can be a woven or non-woven mat formed from an agglomeration of glass fibers held together by a resin or binder. Example binders include polyvinyl alcohol as a primary binder and styrene acrylate as a secondary binder. The scrim may also contain any fire retardant that is known in the art so long as the retardant is substantially free of formaldehyde. Example fiberglass scrims include CC75, CK21, CK31 fiberglass scrims available from Owens Coming, Apeldooran, Netherand.

In an embodiment, the wicking tension of the scrim is between about 55 to about 70 dynes/cm. A further embodiment includes a wicking tension of the scrim being between about 60 to about 65 dynes/cm. The higher wicking values aid in creating a more pleasing visual such as in producing a brighter finished scrim with a greater gloss value. For example, the gloss value for the finished panel can average between about 0.1 to about 0.2 as measured by a BYK Gardener Gloss meter at 85°F. In a further embodiment, the finished panel average for the measure gloss value may be about 0.15.

The scrim is attached to the facing side by an adhesive. The adhesive attaching the scrim is substantially formaldehyde free. The adhesive comprises about 15% to about 70% by weight of at least one non-hydrolyzable, hydrophobic monomer copolymerized into the polymer structure of the adhesive. In an additional embodiment, the adhesive may comprise about 25% to about 50% by weight of a non-hydrolyzable, hydrophobic monomer and in a further embodiment, the adhesive comprises about 30% to about 40% by weight of a non-hydrolyzable, hydrophobic monomer. Such monomers are resistant to hydrolysis and are not susceptible to attack by microbes such as bacteria and fungi, thus they do not require or require a minimal amount of formaldehyde as a preservative to prevent biodegradation. Example monomers include ethylene, styrene, vinyl chloride, vinylidene chloride/fluoride and combinations thereof. This list only illustrates possible monomers and further monomers are contemplated for use in the present adhesive.

An example adhesive includes Airflex 920 from Air Products and Chemicals Inc, Allentown, PA. An example formulation of the adhesive may include 80% Airflex 920, 1% Defoamer (Tego) available from East Falls Corp., Frazer, PA, 1% Tamol 731A, Rohm Haas, Philadelphia, PA, Formaldehyde Scavenger 1%-5% (Urea Formaldehyde Scavenger), DE83R 12% (decabromo diphenyloxide), available from Great Lakes Chemical, West Lafayette, IN, Antimony Oxide 5% and Alcogum 296W 1.5% from ALCO Chemical available Chattanooga, TN.

As indicated, the adhesive may include a formaldehyde scavenger. An example of a formaldehyde scavenger is urea. Urea may be added in amounts of from about 1% to about 20% by weight of the adhesive. Additional scavengers include polyamide scavengers which may be either a synthetic polyamide or a natural polyamide. Synthetic polyamides may include polyacrylamides, polymethacrylamides, polyamide telomers, copolymers, terpolymers, tetrapolymers, N-substituted polyamides and combinations thereof. Natural polyamides include proteins such as casein or soy protein. Such scavengers are further described in a copending application entitled Low Formaldehyde Emission Coatings and Binders from Formaldehyde-Based Resins, Attorney Docket No. A148.1620, which is incorporated by reference herein in its entirety. In addition other scavengers based in monomeric structures such as acetamide, alkyl-, aryl-amides, acryl- and methacrylamides, and their N-substituted derivatives, are also included. The scavengers may be added in amounts greater than about 20%, such as 1% to 30% or 1% to 40%.

Additionally, an acoustical coating may be applied to the scrim of the finished laminated panel or before applying the scrim as a primer or intermediate coating. The coating may add brightness to the panel and scratch resistance along with serving as a primer coating. Examples of such coating can be found in US. Patent Nos. 6,316,535 and 6,284,351, both of which are incorporated herein in their entirety. Furthermore, the backing side of the substrate may also be coated with a coating containing a formaldehyde scavenger.

The amount of sound energy absorbed by a material is determined by a standardized test procedure ASTM C423-90a entitled "Standard Test Method for Sound Absorption and Sound Absorption Coefficients By The Reverberation Room Method". Absorption is expressed as the ratio of the sound energy absorbed to the sound energy incident to the panel surface. Sound absorption data is often combined into a single number called the noise reduction coefficient, NRC, which is obtained from the average value of A at 250, 500-1000 and 2000 Hz rounded to the nearest multiple of 0.05. The higher the NRC value, the greater the average sound absorption in this frequency range. The present acoustically absorbent porous panels typically have Noise Reduction Coefficient (NRC) of greater than 0.5. In an additional embodiment, the panels have a NRC of greater than 0.6 and in a further embodiment the panels have a NRC of greater than 0.7.

In Figure 1, the laminated low-formaldehyde panel is shown having both the substrate 2 and scrim 8. The substrate 2 has a facing side 4 and a backing side 6. The facing side 4 has a scrim 8 adhered to the facing side 4.

While preferred embodiments have been illustrated and described above, it is recognized that variations may be made with respect to features and components of the invention. Therefore, while the invention has been disclosed in preferred forms only, it will be obvious to those skilled in the art that many additions, deletions and modifications can be made therein without departing from the spirit and scope of this invention, and that no undue limits should be imposed thereon except as set forth in the following claims. For example, it is contemplated that many types of materials may comprise the core of the inventive panel, as described above. Additionally, the present invention is not limited to ceiling tiles, but may include wall structures, exterior coverings and tackable surfaces.

## Claims

1. A low-formaldehyde panel comprising:
a substrate having a facing side and a backing side; and
a scrim attached to the facing side by a polymeric adhesive, the adhesive including about 15% to about 70% by weight of a copolymerized non-hydrolyzable, hydrophobic monomer and about 1% to about 20% by weight of a formaldehyde scavenger.

2. The panel of claim 1, wherein the scrim is formed from fiberglass.

3. The panel of claim 2, wherein the fiberglass of the scrim is bound by a polyvinyl alcohol and is substantially free of formaldehyde.

4. The panel of claim 1, wherein a wicking tension of the scrim is between about 55 to about 70 dynes/cm.

5. The panel of claim 1, wherein the gloss level of the acoustical panel is between about 0.1 to about 0.2.

6. The panel of claim 1, wherein the copolymerized non-hydrolyzable, hydrophobic monomer is selected from the group consisting of ethylene, styrene, vinyl chloride, vinylidene chloride/fluoride and combinations thereof.

7. The panel of claim 1, wherein the polymeric adhesive comprises about 25% to about 50% by weight of the copolymerized non-hydrolyzable, hydrophobic monomer.

8. The panel of claim 1, wherein the adhesive comprises about 30% to about 40% by weight of the copolymerized non-hydrolyzable, hydrophobic monomer.

9. The panel of claim 1, wherein the adhesive further comprises a fire retarding agent which is substantially free of formaldehyde.

10. The panel of claim 1, wherein the panel further comprises a coating applied to the scrim.

11. The panel of claim 2, wherein the coating is substantially acoustically transparent and includes a formaldehyde scavenger.

12. The panel of claim 1, wherein the substrate is an acoustically absorbent fiber board.

13. The panel of claim 1, wherein the formaldehyde scavenger comprises urea.

14. The panel of claim 1, wherein the panel has a formaldehyde emittance of less than about 20 µg/m² per hour.

15. The panel of claim 1, wherein the Noise Reduction Coefficient (NRC) of the panel is greater than 0.6.

16. The panel of claim 1, wherein a coating comprising a formaldehyde scavenger is applied to the backing side of the substrate.

17. The panel of claim 1, further comprising a formaldehyde scavenger containing coating disposed between the substrate and the scrim.

18. The panel of claim 1, further comprising a formaldehyde scavenger containing coating applied to the scrim.

19. The panel of claim 1, further comprising a formaldehyde scavenger containing coating applied to the backing side of the substrate.

20. The panel of claim 19, wherein a formaldehyde scavenger containing coating applied to the side of the scrim opposite the substrate and a formaldehyde scavenger containing coating is disposed between the substrate and the scrim.

21. A low-formaldehyde panel comprising:
a substrate having a facing side and a backing side;
a substantially formaldehyde free scrim formed from fibers bound by a substantially formaldehyde free resin, the scrim having a wicking tension of between about 55 to about 70 dynes/cm, where the scrim is attached to the facing side by an adhesive, wherein the adhesive includes from about 15% to about 70% by weight of a copolymerized non-hydrolyzable, hydrophobic monomer.

22. The panel of claim 21, wherein the panel has a formaldehyde emittance of less than about 20 µg/m² per hour.

23. The panel of claim 21, wherein the scrim is formed from fiberglass and the substantially formaldehyde free resin binding the fibers includes a polyvinyl alcohol.

24. The panel of claim 21, wherein the substrate is an acoustically absorbent fiber board.

25. A method of forming a low-formaldehyde panel comprising:
providing a substrate having a facing side; and
adhering to the facing side a scrim attached to the facing side by an adhesive, the adhesive including about 15% to about 70% by weight of a copolymerized non-hydrolyzable, hydrophobic monomer and about 1% to about 20% by weight of a formaldehyde scavenger.
